# EUROPÄISCHE PATENTSCHRIFT

(11) **EP 2 069 255 B1**
(45) Veröffentlichungstag und Bekanntmachung des Hinweises auf die Patenterteilung: **03.12.2014**
(21) Anmeldenummer: 07820983.0
(22) Anmeldetag: 05.10.2007
(51) Int. Cl.: C04B 18/28, C04B 28/02

(54) **BAUSTOFF MIT PFLANZLICHEM ZUSCHLAG**
BUILDING MATERIAL WITH PLANT FILLER
MATÉRIAU AVEC UN SUPPLÉMENT VÉGÉTAL

(30) Priorität: 06.10.2006 EP 06121923
(43) Veröffentlichungstag der Anmeldung: 17.06.2009
(73) Patentinhaber: Miscanthus-Nawaro-Innovations S.A., 1510 Luxembourg (LU)
(72) Erfinder: HÖHN, Heribert, L-7563 Mersch (LU)
(74) Vertreter: Office Freylinger
(86) Internationale Anmeldenummer: PCT/EP2007/060610
(87) Internationale Veröffentlichungsnummer: WO 2008/040809

(56) Entgegenhaltungen:
- WO-A-2006/010985
- GB-A- 537 683
- GB-A- 1 150 600
- CHEMICAL ABSTRACTS, Bd. 103, Nr. 24, 16. Dezember 1985 (1985-12-16), Columbus, Ohio, US; abstract no.: 200127d, TEREKHOV, V. A.: "Raw material mixture for structural articles" Seite 265 XP000061310 & SU 1 167 171 A1 (GVNII STR MATERIALOV K [SU]; VI DEREVOOBRABATYVAYUSHCHEJ PR [SU]) 15. Juli 1985 (1985-07-15)

## Beschreibung

### Technisches Gebiet

Die vorliegende Erfindung betrifft allgemein ein Verfahren zur Herstellung eines Baustoffs mit pflanzlichem Zuschlag, Zusammensetzungen für deren Herstellung, sowie die so erhältlichen Baustoffe und deren Verwendung als Fertigbauteile.

### Stand der Technik

Im Stand der Technik sind vielfältige Kombinationen auf der Grundlage pflanzlicher Rohstoffe bekannt. Einerseits wird das Bauwesen durch den Einsatz derartiger Rohstoffe innovativ und ökologisch: Mensch und Natur werden dank ressourcenschonender und gesundheitsfreundlicher, nachwachsender Rohstoffe in Einklang gebracht. Andererseits aber werfen diese Baustoffe das Problem auf, optimal ausgeglichene Eigenschaften (niedriges spezifisches Gewicht, Wärmeleitfähigkeit bzw. Wärmedurchgangskoeffizient, Schallisolierung, Biege-, Druck- und Zugfestigkeit, sowie Beständigkeit (Alterungsprozess)) zu erzielen.

Außerdem, damit solche innovativen Produkte sich im Markt durchsetzen können müssen sie so wirtschaftlich wie möglich sein, d.h. sowohl deren Herstellung als auch deren Anwendung muss wirtschaftlichen Erwägungen in Bezug auf Anschaffungs- und Benutzungskosten standhalten.

Das größte Problem beim Verarbeiten von pflanzlichen Rohstoffen ist seit jeher die Verbindung zwischen den Pflanzlichen Bestandteilen und den mineralischen Bestandteilen, z.B. dem Bindemittel (Zement).

Frühere, wie z.B. die in GB 662670 oder EP 1108696 offenbarten Verfahren beruhen auf einer Vormineralisation des pflanzlichen Zuschlags. Hier wird die Pflanzenmasse mit einem Mineralisator vorbehandelt und anschließend getrocknet. Die eigentliche Herstellung des Baustoffes (z.B. Mörtel oder Beton) beinhaltet das Verrühren dieser vormineralisierten Pflanzenbasis mit Bindemittel und Anmachwasser. Der Hauptnachteil dieser Verfahren ist die weitaus zeit- und energieaufwändigere Behandlung der Rohstoffe, da der Mineralisationsprozess, auch Verkieselung genannt, und die eigentliche Baustoffherstellung zeitlich und räumlich getrennt voneinander stattfinden.

In der Patentschrift GB 537683, bzw. DE 739166, wird vorgeschlagen organische Stoffe, wie Sägespäne, Hobelspäne, Reisstroh, Papier- und Faserabfälle, Müll u. dgl., mit der halben Gewichtsmenge gemahlenem, gebranntem Kalk (Calciumoxyd) trocken zu vermischen und unter Fortsetzung des Mischvorgangs mit nur soviel Löschwasser, ggf. mit weiteren Zusätzen, zu versetzen wie zur Bildung einer erdfeuchten Masse erforderlich ist, die dann durch den wasserabbindenden Löschvorgang trocknet. Die Schrift beschreibt weiterhin eine Ausführungsform in der beim Mischvorgang auch bereits das Bindemittel, z.B. Zement und hierdurch die beim folgenden Löschen des Kalkes entwickelte Wärme zur beschleunigten Abbindung ausgenutzt wird.

Allerdings ist vom Verarbeiten von ungelöschtem Branntkalk (CaO) aus sicherheitstechnischen Überlegungen sowohl vor als auch während dem Löschvorgang abzuraten, da starke Verätzungsgefahr sowohl durch CaO-Staub selbst, als auch durch die sehr stark exotherme Reaktion verursachten ätzenden Kalkspritzer beim Vermischen besteht. Außerdem können durch die starke Hitzeentwicklung Verbrennungen und Verbrühungen nicht ausgeschlossen werden.

Obwohl bei diesem Verfahren offenbar die Reaktionswärme zur Mineralisierung genutzt und gebraucht wird, würde der Fachmann vielleicht auf den Gedanken kommen, dass gelöschter Kalk auch die erwünschte Mineralisierung herbeiführen könnte.

Sowohl in der Einleitung der beiden gerade beschriebenen Schriften, als auch in der bereits genannten GB 662670, werden Verfahren beschrieben die mit gelöschtem Kalk eine Mineralisierung bezwecken. Doch handelt es sich hier in allen Fällen um sogenannte Vormineralisierungen, bei denen die Mineralisierung nicht nur ein getrennter Arbeitsgang mit besonderen Vorrichtungen darstellt, sondern auch längere Zeit in Anspruch nimmt, z.B. 24 Stunden, oder sogar durch energieaufwändiges Sieden in Kalkmilch gänzlich unwirtschaftlich wird.

Unstrittig scheint zu sein, dass ein sogenannter Mineralisator, d.h. ein Kompatibilisierungs- oder Verträglichkeitsmittel zwischen organischen und mineralischen Bestandteilen, nötig ist um die gewünschten und vorgeschriebenen Eigenschaften des Endprodukts zu erreichen.

Was die Natur und die Zusammensetzung eines solchen Mineralisators, sowie dessen Anwendung betrifft, wurden folglich unzählige Lösungen vorgeschlagen, deren Durchbruch in der Industrie jedoch größtenteils ausblieb, entweder weil sich nicht die erforderten Eigenschaften erreichen ließen, oder weil die Anwendbarkeit auf einige wenige Anwendungen beschränkt blieb, oder aber weil das Verfahren nicht wirtschaftlich betrieben werden konnte.

Im Stand der Technik wurden üblicherweise Aluminiumsulfat und Cefkaform zur Vormineralisierung verwendet, jedoch sind diese Mineralisatoren weder ökologisch vertretbar, noch vereinbar mit der Anforderung für preiswerte Baustoffe. Außerdem ist der in diesem Fall erforderte Trocknungsschritt der vormineralisierten pflanzlichen Rohstoffen unwirtschaftlich.

Das oben erwähnte Verfahren aus EP 1108696, bei dem Zement als kostengünstiger Mineralisator in einem Vormineralierungsprozess eingesetzt wird, ergibt Baustoffe die den Erfordernissen an Festigkeit nicht genügen. Außerdem ist auch hier der benötigte Trocknungsschritt nach der Vormineralisierung unwirtschaftlich.

Auch dem in der oben genannten Patentschrift GB 662670 beschriebenen Verfahren, wobei die pflanzlichen Rohstoffe z.B. in einer kostengünstigen Kalkhydrat-Lösung während zwei Stunden gekocht und anschließend getrocknet werden, haftet das Problem der Unwirtschaftlichkeit an.

Andere Lösungsversuche, wie z.B. die Verwendung von Mineralisatoren, z.B. auf Calcium- und Magnesiumcarbonatbasis, direkt beim Anrühren des Baustoffs (Direktmineralisierung), wie z.B. in WO 02/12145 beschrieben, erreichen nicht immer die erhofften Werte in bezug auf Festigkeit. Auch die Wärmeleitfähigkeit leidet im Prinzip an der großen Menge an Mineralisator, da das spezifische Gewicht des Endprodukts ein guter Indikator für die Wärmeleitfähigkeit ist. Ein weiteres Problem z.B. bei dem in WO 02/12145 vorgeschlagenen Mineralisator sind regionale Schwankungen in der Zusammensetzung des Mineralisators, was zu schwer voraussagbaren und reproduzierbaren Ergebnissen in bezug auf die erhaltene Festigkeit führt.
WO 2006/010985 beschreibt einen Baustoff mit pflanzlichem Zuschlag und einem Mineralisator auf Basis von einem Calcium/Magnesium-Mischkarbonat.
In CHEMICAL ABSTRACTS, Bd. 103, Nr. 24, 16. Dezember 1985 (1985-12-16), Columbus, Ohio, US; abstract no.: 200127d, TEREKHOV, V. A.: "Raw material mixture for structural articles" Seite 265 wird ein Verfahren zur Herstellung eines Baustoffs offenbart, umfassend das schrittweise Mischen in einem Mischgerät von 31 - 47 Gew.-% Zement und 2 - 8 Gew.-% Holzschnitzeln, 15 - 25 Gew.-% hydratisiertem Kalk, 5 - 8 Gew.-% CaCl₂-Lösung und Wasser.
GB 1 150 600 beschreibt in Beispiel 2 einen Baustoff hergestellt aus einem Eimer feinem Sand, einem Eimer grobem Sand, ¼ Eimer Zement und ¼ Eimer Kalkhydrat, einem Eimer Strohschnitzel und Wasser.

Es ist andererseits bekannt, dass ein Zusatz an Kalkhydrat in herkömmlichen zementbasierenden Mischungen (ohne pflanzlichen Zuschlag) allgemein die Verarbeitbarkeit, Maschinengängigkeit und "Geschmeidigkeit" des Bindemittels verbessert. Größere Mengen Weißkalkhydrat führen jedoch zu einem Rückgang der Festigkeit und der Wasserbeständigkeit. Eingesetzt werden solche Zementputze der sogenannten Mörtelgruppe PIII a vorwiegend als Sockelputz, als Kelleraußenwandputz oder auf Wänden, die unter starker mechanischer Beanspruchung stehen, wobei diesen Zementputzen bis zu 0,5 Vol.% Kalkhydrat zugesetzt wird.

Außerdem weiß man, dass bei der Härtungsreaktion von zementbasierenden Mischungen außer Hydratphasen auch das alkalische Calciumhydroxid entsteht, welches für eine gute korrosionshemmende Wirkung des Zementes verantwortlich ist.

Die zahlreichen Versuche und Bemühungen Beton und andere Baustoffe mit pflanzlichen Zusätzen herzustellen, und so bessere Wärme- und Schalldämmungswerte bei gleichzeitiger ressourcenschonender und ökologischer Verwertung von Rohstoffen zu erreichen, veranschaulicht den Bedarf an solchen vorteilhaften Produkten.

### Aufgabe der Erfindung

Eine Aufgabe der vorliegenden Erfindung ist es folglich die Herstellung von Baustoffen, wie Beton und Mörtel, auf Basis eines pflanzlichen Zuschlags einfacher und billiger zu gestalten, wobei der ausgehärtete Baustoff ein relativ geringes spezifisches Gewicht, sowie gute Eigenschaften betreffend Wärmedämmung, Schallisolierung, Biegezugfestigkeit und Druckfestigkeit aufweisen soll.

### Allgemeine Beschreibung der Erfindung

Diese Aufgabe wird erfindungsgemäß gelöst durch ein Verfahren zur Herstellung von Baustoffen mit pflanzlichem Zuschlag, umfassend das Mischen von
(a) 1000 l des ggf. zerkleinerten pflanzlichen Zuschlags mit einem spezifischen Gewicht von 70 bis 160 kg/m³,
(b) 40 bis 80 kg eines Mineralisators,
(c) 200 bis 280 kg eines Bindemittels auf Zementbasis, und
(d) 200 bis 280 kg Anmachwasser,
wobei der Mineralisator aus Kalkhydrat, bevorzugt Weißkalkhydrat, besteht.

Wie oben bereits angedeutet, ist die notwendige Grundlage für eine gute Effizienz und Funktionszuverlässigkeit eines Baustoffes mit pflanzlichem Zuschlag im Laufe der Zeit, dass letzterer mit dem Bindemittel optimal verklebt. Dabei spielen verschiedene Faktoren eine bedeutende Rolle. Zu diesen Faktoren gehören die Wahl des Mineralisators hinsichtlich Struktur und Zusammensetzung, sowie die vom pflanzlichen Zuschlag aufzuweisende Restfeuchtigkeit.

Als Mineralisator wird im erfindungsgemäßen Verfahren Kalkhydrat, bevorzugt Weißkalkhydrat, d.h. im wesentlichen Calciumhydroxid Ca(OH)₂ oder Calcium- und Magnesiumhydroxid der allgemeinen Formel Ca₁₋ₓMgₓ(OH)₂, wobei x im allgemeinen kleiner oder gleich 0,5, bevorzugt kleiner oder gleich 0,2, besonders bevorzugt kleiner oder gleich 0,05 ist. Dabei ist zu beachten, dass die verwendbaren Weißkalkhydrate auch Nebenteile, wie beispielsweise SiO₂, Al₂O₃, Fe₂O₃ und/oder SO₃, in geringen Mengen enthalten können, z.B. bis zu 10 Gewichtsprozent, im allgemeinen jedoch nur bis zu 5 Gewichtsprozent.

Die Beimischung von Kalkhydrat in herkömmliche hydraulisch abbindende Baustoffe ohne pflanzlichen Zuschlag war bisher nur bekannt im Zusammenhang mit der Erhöhung der Verarbeitbarkeit von Putzmörteln, d.h. um diese geschmeidiger zu machen.

Nun wurde festgestellt, dass das Kalkhydrat in Kombination mit hydraulischen Bindemitteln, wie Zement, und Pflanzen die Verbindung der mineralischen Phase zum pflanzlichen Zuschlag erheblich verbessert.

Ein weiterer Vorteil der Erfindung ist ein schnelleres Abbindeverhalten der angerührten Baustoffe, was sich natürlich wirtschaftlich positiv auf die Produktionskosten auswirkt.

Auch scheint die keimhemmende Wirkung von Kalkhydrat die Verwendung von Fungiziden und ähnlichen Mitteln in den allermeisten Baustoffen überflüssig zu machen, was andererseits natürlich die ökologische Wertigkeit der Baustoffe erhöht.

Besonders bevorzugt besteht das verwendete Weißkalkhydrat zu mehr als 70 Gewichtsprozent aus Calcium- und ggf. Magnesiumhydroxid, gerechnet als Calcium- und Magnesiumoxid, und enthält weniger als 12 Gewichtsprozent Carbonate, gerechnet als CO₂. Ganz besonders bevorzugt sind Weißkalkhydrate die den von der European Standardisation Organisation/CEN herausgegebenen Normen EN 459-1 CL 70-S, EN 459-1 CL 80-S oder EN 459-1 CL 90-S entsprechen und als solche im Handel erhältlich sind.

Vorteilhaft ist diesbezüglich, dass solche genormten Weisskalkhydrate sehr eng definierte Werte was die Inhaltsstoffe selbst sowie deren Verhältnisse zueinander betrifft. Diese Produkte unterliegen folglich nicht dem obengenannten Nachteil der regionalen Variabilität und der daraus resultierenden Probleme.

Ein weiterer Vorteil der Erfindung ist es, dass der Kalkhydratmineralisator einerseits sehr kostengünstig ist und andererseits in im Vergleich zu Calcium- und/oder Magnesiumcarbonat relativ geringen Mengen eingesetzt werden kann. Außerdem ist das Kalkhydrat sehr leicht zu verarbeiten, d.h. in die Baustoffmischung einzumischen. Kombiniert mit dem geringen spezifischen Gewicht dieser Substanz ergibt sich somit sehr gute Bedingungen für leichte, wärmedämmende, ökologisch unbedenkliche und wirtschaftliche Baustoffe.

Der ggf. zerkleinerte pflanzliche Zuschlag kann im Prinzip je nach Anwendung des Baustoffes aus praktisch jeder Pflanze gewonnen werden, bevorzugt aus schnell nachwachsenden Pflanzen, wie Miscanthus und andere. Schilfarten, Holz, wie z.B. Nadelholz, Gräser, wie Switchgras oder Raigras, Topinambur, Hanf, Flachs, Stroh, Palmenrispen, Zuckerrohr, z.B. die Bagasse, oder deren Mischungen, wobei je nach Pflanzenart und -teil Fasern, Späne, Körner, Splitter oder sonstige Partikel Verwendung finden.

Der pflanzliche Zuschlag wird falls nötig zerkleinert, wobei entsprechende bekannte Sieblinien eingesetzt werden. Welche Partikelform und -größe vorzuziehen bzw. zu wählen ist, wird in Anbetracht der beabsichtigten Anwendung des Baustoffes entschieden. Der pflanzliche Zuschlag setzt sich beispielsweise aus faserigen Teilchen mit einem Durchmesser von 0 bis 5,0 mm zusammen. Soll ein Leichtbeton oder Leichtestrich hergestellt werden, so ist es von Vorteil, wenn sich der pflanzliche Zuschlag zum größten Teil aus faserigen Teilchen mit einer Länge von 5 mm bis 40 mm zusammensetzt. Soll z.B. ein Leichtputz oder Wärmedämmputz hergestellt werden, so ist es von Vorteil wenn sich der pflanzliche Zuschlag zum größten Teil aus faserigen Teilchen mit einer Länge unter 5 mm zusammensetzt.

Es ist vorteilhaft wenn der pflanzliche Zuschlag relativ trocken ist, das heißt je nach Pflanzenart und -teil mit einer Restfeuchte von ca. 5 bis ca. 25 %, bevorzugt von 10 bis 20 %, besonders bevorzugt von ca. 15 %. Miscanthus, Hanf und Stroh z.B. weisen bei der Ernte diese besonders bevorzugte Restfeuchte auf, so dass es nicht nötig ist, sie vorher zu trocknen.

Es konnte festgestellt werden, dass das spezifische Gewicht der so vorbereiteten pflanzlichen Basis verschiedenster Beimischungen (also generell bei einer Restfeuchte von ca. 10 bis 20 %) zwischen ca. 70 und ca. 160 kg/m³ liegt. Beispielsweise weist Nadelholz ein spezifisches Gewicht von ca. 140 kg/m³, Miscanthus von ca. 120 kg/m³, Topinambur von ca. 85 kg/m³ und Stroh von ca. 80 kg/m³ bei einer Restfeuchte von ca.10 bis 20 % auf.

Vorteilhafterweise, können die erfindungsgemäßen Baustoffe durch ein einfaches Verfahren hergestellt werden, wobei der ggf. zerkleinerte pflanzliche Zuschlag (a), der Mineralisator (b), das Bindemittel (c) und das Anmachwasser (d) im wesentlichen zeitgleich oder zeitnah zusammengemischt werden. Die Reihenfolge ist dabei zweitrangig, kann sich aber je nach Mischart oder Mischertyp leicht unterscheiden.

Je nach pflanzlichem Zuschlag und den Anforderungen an den Baustoff kann es vorteilhaft sein eine Variante des Verfahrens zu verwenden, wobei zuerst der ggf. zerkleinerte pflanzliche Zuschlag (a), der Mineralisator (b), und ein Teil des Anmachwassers (d) während einer Vormischdauer zusammengemischt werden, bevor das Bindemittel (c) und der Rest vom Anmachwasser (d) eingemischt werden, z.B. in einem Ringtrogmischer oder einem Tellermischer, usw.

In dieser Variante des Verfahrens, beträgt die Vormischdauer generell ca. 0,2 bis ca. 3 Minuten, bevorzugt ca. 0,5 bis ca. 1,5 Minuten. Es wurde festgestellt, dass während dieser sogenannten einleitenden Mineralisierung in Abwesenheit vom Bindemittel eine noch bessere Anbindung der organischen Phase an die mineralische Phase ermöglicht wird. Nach Einbringen des restlichen Anmachwassers wird die Baustoffmischung noch während ein paar Minuten, bevorzugt ca. 3 bis ca. 4 Minuten weitergemischt, wonach die Baustoffmischung bereit zur Verarbeitung ist.

Das Bindemittel auf Zementbasis ist ein hydraulisches Bindemittel und kann jede Art von hydraulischem Zement sein, bevorzugt ist jedoch Portlandzement, speziell der Güte 52.5.

In einem typischen erfindungsgemäßen Verfahren verwendet man, pro Kubikmeter des pflanzlichen Zuschlages (a), ca. 220 bis 260 kg Bindemittel auf Zementbasis (c), vorzugsweise Portlandzement der Güte 52.5, ca. 40 bis 80 kg Mineralisator (b) und ca. 300 bis 350 Liter Anmachwasser (d), je nach gewählter Konsistenz.

Die oben angegebenen Inhaltsstoffe (a), (b) und (c) können auch für den industriellen oder privaten Endverbraucher als Fertigzusammensetzungen fertig vorgemischt und in kleineren oder größeren Einheiten verpackt werden (z.B. (a)+(b)+(c) zusammen, nur (a)+(b), oder als Kit mit einerseits (a)+(b) und andererseits (c)), wobei die Zusammensetzungen je nach Art des zu erhaltenden Baustoffs (z.B. Putz, Mörtel, Leichtbeton, usw.) abgestimmt wurden (siehe auch untenstehende Beispiele). Diese Fertigzusammensetzungen können dann durch den Endverbraucher mit der auf der Verpackung angegebenen Menge an Anmachwasser (d) angerührt und anschließend verarbeitet werden.

Die Verarbeitung kann wie bei herkömmlichen Baustoffen erfolgen, oder auch durch andere Verfahren wie Extrusion, usw.

Die durch das erfindungsgemäße Verfahren hergestellten Baustoffe eignen sich hervorragend für die Herstellung von ökologischem und wärmedämmendem Leichtbeton, Mörtel für Innen- und Außenputz, Estrichen und schwimmenden Estrichen, sowie ökologischen und wärmedämmenden Fertigwandelementen, Bausteinen und Dämmplatten. Diese Produkte finden ihre Anwendung sowohl im ökologischen Neubau von z.B. Ein- oder Mehrfamilienhäusern, wie bei der Sanierung von bereits bestehenden Gebäuden, z.B. bei der nachträglichen Trittschallisolierung von Holzdecken, wobei auch das relativ geringe Eigengewicht des fertigen Produktes (je nach Zusammenstellung 350 bis 550 kg/m³) zur Geltung kommt.

Die erfindungsgemäßen Baustoffe können weitere übliche Inhaltsstoffe enthalten, je nach beabsichtigter Verwendung. Als Beispiel können (ökologisch vertretbare) Beschleuniger, Verzögerer, Luftporenbildner, ... genannt werden.

Wie bereits gesagt ist die Verwendung eines Fungizids unter normalen Bedingungen durch Verwendung des erfindungsgemäßen Mineralisators weder nötig, noch wünschenswert, jedoch kann, falls erwünscht, das Anmachwasser mit einem Fungizid angereichert werden, wobei kein Einfluss auf die mechanischen und/oder physikalischen Eigenschaften des Baustoffes festgestellt werden konnte.

Weitere Einzelheiten und Vorteile der Erfindung können der nachfolgenden ausführlichen Beschreibung möglicher Ausführungsformen der Erfindung entnommen werden.

### Beschreibung mehrerer Ausgestaltungen der Erfindung

Bei den nachstehend zur Illustration beschriebenen Beispielen wird lediglich entweder Miscanthus oder eine Mischung von Miscanthus und Nadelholz (rindenfrei) eingesetzt. Das durchschnittliche spezifische Gewicht beträgt dabei ca. 130 kg/m³. Die unten angegebenen Werte beziehen sich jeweils auf 1 m³ pflanzlicher Zuschlag.

### Beispiel (A): Außenwände

(a) Pflanzlicher Zuschlag: Miscanthus, Faserlängenbereich ca. [0 - 35] mm
(b) Mineralisator: EN 459-1 CL 90-S, Menge: ca. 50 kg (= ca. 125 l)
(c) Bindemittel: Portlandzement PZ 52.5, Menge: ca. 220 bis 260 kg, vorzugsweise 240 kg
(d) Anmachwasser: Menge: ca. 300 bis 350 kg, vorzugsweise 300 kg

### Beispiel (B): Schnellbauplatten

(a) Pflanzlicher Zuschlag: Mischung aus Miscanthus und Nadelholz
   Miscanthus: Faserlängenbereich ca. [0 - 3] mm
   Nadelholz: Späne ca. [0 - 3]mm
   Gewichtsanteile: ca. 50 zu 50
(b) Mineralisator: Menge: ca. 50 kg (= ca. 125 l)
(c) Bindemittel: Portlandzement PZ 52.5, Menge: wie Beispiel (A)
(d) Anmachwasser: Menge: wie Beispiel (A)

### Beispiel (C) : Absorptionsschichten für Schallschluckwände

(a) Pflanzlicher Zuschlag: Mischung aus Miscanthus und Nadelholz
   Gewichtsanteile: ca. 30 (entspricht ca. 39 kg Miscanthus) zu ca. 70 (entspricht ca. 91 kg Nadelholz)
   Miscanthus: Faserlängenbereich ca. [2 - 35] mm, und Nadelholz: Rundkorndurchmesser ca. [6 - 8] mm, Anteil 65 % Spanlänge: ca. [3 - 30] mm, Anteil 35 %
(b) Mineralisator: EN 459-1 CL 90-S, Menge: 50 kg (= ca. 125 l)
(c) Bindemittel: Portlandzement PZ 52.5, Menge: wie Beispiel (A)
(d) Anmachwasser: Menge: wie Beispiel (A)

### Beispiel (D): Innenputz

(a) Pflanzlicher Zuschlag: Mischung aus Miscanthus und Nadelholz
   Gewichtsanteile 50 zu 50 (entspricht je 65 kg).
   Miscanthus: Faserlängenbereich ca. [0-2.5] mm, und
   Nadelholz: Späne ca. [0 - 2.5] mm
(b) Mineralisator: EN 459-1 CL 90-S, Menge ca. 80kg (= ca. 200 l)
(c) Bindemittel: Portlandzement PZ 52.5, Menge: ca. 260 kg
(d) Anmachwasser: Menge: wie Beispiel (A)

### Beispiel (E): Außenputz

(a) Pflanzlicher Zuschlag: wie in Beispiel (D), wobei je nach Strukturwunsch gröbere Sieblinien ausgewählt werden können.
(b) - (d) wie in Beispiel (D)

### Beispiel (F): Wärmedämmputz

(a) Pflanzlicher Zuschlag: Mischung aus Miscanthus und Nadelholz
   Gewichtsanteile: 80 zu 20 (entspricht ca. 104 zu 26 kg);
   Miscanthus: Faserlängenbereich: ca. [0 - 4] mm, und
   Nadelholz: Späne: ca. [0 - 4] mm.
(b) - (d): wie in Beispiel (D)

Aus der Analyse der Werte die anhand dieser Beispiele verzeichnet wurden und sich immer bestätigt haben kann festgestellt werden, dass unabhängig von der Anwendungsgruppe innerhalb welcher der Baustoff einzureihen ist, der Mineralisator in relativ geringen Mengen benutzt werden kann.

Die Proportionen der Komponenten des Baustoffes, insbesondere des Bindemittels zu dem Mineralisator, bzw. des Mineralisators zu dem pflanzlichen Zuschlag führen zu einem perfekten Kompromiss gemäss welchem eine hervorragende Klebefähigkeit des pflanzlichen Zuschlags mit dem Bindemittel und ausgezeichnete Eigenschaften hinsichtlich Druckfestigkeit, Biegezugfestigkeit, Wärmeleitfähigkeit, Schalldämpfung und Gewicht erzielt werden.

So ergaben nach 28 Tagen durchgeführte Messungen an mit dem erfindungsgemäßen Baustoff hergestellten Proben von Außenwänden eine Wärmeleitfähigkeit λ unter 0.07 W/(m.K) (zum Vergleich erreichen Styropor einen λ-Wert von 0,04 und Hochlochziegel-Porotonsteine einen λ-Wert von 0,36). Bei 30 cm dicken Wänden erreichte der Wärmedurchgangskoeffizient U = 0,19 W/(m².K), was die Anforderungen an den Wärmeschutz der Wände von Niedrigenergiehäusern erfüllt.

Das Gewicht von mit dem erfindungsgemäßen Baustoff hergestellten Schnellbauplatten (siehe oben, Beispiel (B)) mit den Maßen (L = 2500 mm, B = 1250 mm, D = 13 mm) beträgt, inklusive Spezialpapier und Klebestoff und nach Abzug des austrocknenden Wassers, ca. 20 kg. Dies entspricht also einem Gewicht von ca. 7 kg/m², also ca. 2/3 des Gewichtes einer Rigipsplatte (10 kg/m²).

Schließlich wurde die Druckfestigkeit der Außenwände (siehe oben, Beispiel (A)) gemessen. Werte von 3,5 bis zu 9,43 N/mm², wurden verzeichnet. Die Biegezugfestigkeit beträgt ca. 3,64 N/mm².

## Patentansprüche

1. Verfahren zur Herstellung von Baustoffen mit pflanzlichem Zuschlag, umfassend das Mischen von
(a) 1000 I des ggf. zerkleinerten pflanzlichen Zuschlags mit einem spezifischen Gewicht von 70 bis 160 kg/m³,
(b) 40 bis 80 kg eines Mineralisators,
(c) 200 bis 280 kg eines Bindemittels auf Zementbasis, und
(d) 250 bis 400 I Anmachwasser,
wobei der Mineralisator aus Kalkhydrat, bevorzugt Weißkalkhydrat, besteht.

2. Verfahren nach Anspruch 1, wobei der ggf. zerkleinerte pflanzliche Zuschlag (a), der Mineralisator (b), das Bindemittel (c) und das Anmachwasser (d) im wesentlichen zeitgleichzusammengemischt werden.

3. Verfahren nach Anspruch 1, wobei zuerst der ggf. zerkleinerte pflanzliche Zuschlag (a), der Mineralisator (b), und ein Teil des Anmachwassers (d) während einer Vormischdauer zusammengemischt werden, bevor das Bindemittel (c) und der Rest vom Anmachwasser (d) eingemischt werden.

4. Verfahren nach Anspruch 3, wobei die Vormischdauer von 0,2 bis 3 Minuten, bevorzugt von 0,5 bis 1,5 Minuten beträgt.

5. Verfahren nach einem der Ansprüche 1 bis 4, wobei das Weißkalkhydrat zu mehr als 70 Gewichtsprozent aus Calcium- und ggf. Magnesiumhydroxid, gerechnet als Calcium- und Magnesiumoxid, besteht und weniger als 12 Gewichtsprozent Carbonate, gerechnet als CO₂, enthält.

6. Verfahren nach einem der Ansprüche 1 bis 5, wobei, pro Kubikmeter des pflanzlichen Zuschlages (a), ca. 220 bis 260 kg Bindemittel auf Zementbasis (c), vorzugsweise Portlandzement der Güte 52.5, ca. 40 bis 80 kg Mineralisator (b) und ca. 300 bis 350 Liter Anmachwasser (d) benutzt werden.

7. Verfahren nach einem der Ansprüche 1 bis 6, wobei der ggf. zerkleinerte pflanzliche Zuschlag aus Pflanzen, wie Miscanthus und andere Schilfarten, Holz, wie z.B. Nadelholz, Gräser, wie Switchgras oder Raigras, Topinambur, Hanf, Flachs, Stroh, Palmenrispen oder deren Mischungen, gewonnen wird, wobei je nach Pflanzenart und -teil Fasern, Späne, Körner, Splitter oder sonstige Partikel verwendet werden, und wobei der ggf. zerkleinerte pflanzliche Zuschlag ein spezifisches Gewicht von 70 bis 160 kg/m³ besitzt.

8. Verfahren nach einem der Ansprüche 1 bis 7, wobei der ggf. zerkleinerte pflanzliche Zuschlag eine Restfeuchte von 5 bis 25 %, bevorzugt von 10 bis 20 %, besonders bevorzugt von ca. 15 % aufweist.

9. Fertigzusammensetzung zur Herstellung von Baustoffen mit pflanzlichem Zuschlag, enthaltend
(a) 1000 l pflanzlicher Zuschlag mit einem spezifischen Gewicht von 70 bis 160 kg/m³,
(b) 40 bis 80 kg Weisskalkhydrat-Mineralisator, und
(c) 200 bis 280 kg Bindemittel auf Zementbasis.

10. Baustoff mit pflanzlichem Zuschlag erhältlich durch ein Verfahren nach einem der Ansprüche 1 bis 8 oder durch Anrühren einer Fertigzusammensetzung nach Anspruch 9 mit (d) 250 bis 400 I Anmachwasser.

11. Verwendung eines Verfahrens nach einem der Ansprüche 1 bis 8 oder einer Fertigzusammensetzung nach Anspruch 9 zur Herstellung von Baustoffen, wie Leichtbeton, Leichtmörtel, Leichtestrich, sowie Leichtputz und Wärmedämmputz, Außenwände für Wohnbauten, Schnellbauplatten und Absorptionsschichten für Lärmschutzwände.

## Claims

1. A method for producing building materials with plant-based aggregate comprising mixing
(a) 1000 l of the optionally comminuted plant-based aggregate with a specific weight of 70 to 160 kg/m³,
(b) 40 to 80 kg of a mineraliser,
(c) 200 to 280 kg of a cement-based binder, and
(d) 250 to 400 l of mixing water,
wherein the mineraliser consists of hydrated lime, preferably white hydrated lime.

2. A method according to claim 1, wherein the optionally comminuted plant-based aggregate (a), the mineraliser (b), the binder (c) and the mixing water (d) are mixed together substantially simultaneously.

3. A method according to claim 1, wherein the optionally comminuted plant-based aggregate (a), the mineraliser (b) and a proportion of the mixing water (d) are firstly mixed during a premixing period, before the binder (c) and remainder of the mixing water (d) are mixed in.

4. A method according to claim 3, wherein the premixing period amounts to from 0.2 to 3 minutes, preferably from 0.5 to 1.5 minutes.

5. A method according to one of claims 1 to 4, wherein the white hydrated lime consists to an extent of more than 70 weight per cent of calcium hydroxide and optionally magnesium hydroxide, calculated as calcium oxide and magnesium oxide, and contains less than 12 weight per cent of carbonates, calculated as CO₂.

6. A method according to one of claims 1 to 5, wherein approximately 220 to 260 kg of cement-based binder (c), preferably 52.5 grade Portland cement, approximately 40 to 80 kg of mineraliser (b) and approximately 300 to 350 litres of mixing water (d) are used per cubic metre of plant-based aggregate (a).

7. A method according to one of claims 1 to 6, wherein the optionally comminuted plant-based aggregate is obtained from plants, such as Miscanthus and other kinds of reed, wood, such as for example softwood, grasses, such as switchgrass or ryegrass, Jerusalem artichoke, hemp, flax, straw, palm panicles or mixtures thereof, wherein, depending on the plant species and plant part, fibres, shavings, grains, slivers or other particles are used, and wherein the optionally comminuted plant-based aggregate has a specific weight of 70 to 160 kg/m³.

8. A method according to one of claims 1 to 7, wherein the optionally comminuted plant-based aggregate has a residual moisture content of 5 to 25%, preferably of 10 to 20%, more preferably of approximately 15%.

9. A ready-to-use composition for producing building materials with plant-based aggregate containing
(a) 1000 l of plant-based aggregate with a specific weight of 70 to 160 kg/m³,
(b) 40 to 80 kg of white hydrated lime mineraliser, and
(c) 200 to 280 kg of cement-based binder.

10. A building material with plant-based aggregate obtainable by a method according to one of claims 1 to 8 or by stirring together a ready-to-use composition according to claim 9 and (d) 250 to 400 l of mixing water.

11. Use of a method according to one of claims 1 to 8 or of a ready-to-use composition according to claim 9 for producing building materials, such as lightweight concrete, lightweight mortar, lightweight screed, as well as lightweight render and heat-insulating render, external walls for residential buildings, rapid construction slabs and absorption layers for noise control walls.

## Revendications

1. Procédé pour la production de matériaux de construction comprenant un additif végétal, comprenant le mélange de :
(a) 1000 l de l'additif végétal le cas échéant broyé dont le poids volumique s'élève de 70 à 160 kg/m³ ;
(b) 40 à 80 kg d'un minéralisateur ;
(c) 200 à 280 kg d'un liant à base de ciment ; et
(d) 250 à 400 l d'eau de gâchage ;
dans lequel le minéralisateur est constitué de chaux hydratée, de préférence de chaux blanche hydratée.

2. Procédé selon la revendication 1, dans lequel l'additif végétal le cas échéant broyé (a), le minéralisateur (b), le liant (c) et l'eau de gâchage (d) sont ajoutés par mélange de manière essentiellement simultanée.

3. Procédé selon la revendication 1, dans lequel on ajoute d'abord par mélange l'additif végétal le cas échéant broyé (a), le minéralisateur (b) et une partie de l'eau de gâchage (d) au cours d'un temps de prémélange, avant d'introduire par mélange le liant (c) et le reste de l'eau de gâchage (d).

4. Procédé selon la revendication 3, dans lequel le temps de prémélange s'élève de 0,2 à 3 minutes, de préférence de 0,5 à 1,5 minute.

5. Procédé selon l'une quelconque des revendications 1 à 4, dans lequel la chaux blanche hydratée est constituée à concurrence de plus de 70 % en poids d'hydroxyde de calcium et le cas échéant d'hydroxyde de magnésium, calculés comme oxyde de calcium et comme oxyde de magnésium, et contient moins de 12 % en poids de carbonates calculés comme CO₂.

6. Procédé selon l'une quelconque des revendications 1 à 5, dans lequel, par mètre cube de l'additif végétal (a), on utilise d'environ 220 à 260 kg de liant à base de ciment (c), de préférence du ciment Portland de qualité 52.5, d'environ 40 à 80 kg de minéralisateur (b) et d'environ 300 à 350 l d'eau de gâchage (d).

7. Procédé selon l'une quelconque des revendications 1 à 6, dans lequel on obtient l'additif végétal le cas échéant broyé à partir de plantes, telles que le Miscanthus et d'autres types de roseaux, du bois, comme par exemple du bois de résineux, des herbes telles que le Switchgrass ou le Ray-grass, le topinambour, le chanvre, le lin, la paille, des panicules de palmier ou leurs mélanges, dans lequel, en fonction du type de plante et de la partie de la plante, on utilise des fibres, des copeaux, des grains, des paillettes ou d'autres particules, et dans lequel l'additif végétal le cas échéant broyé possède un poids volumique de 70 à 160 kg/m³.

8. Procédé selon l'une quelconque des revendications 1 à 7, dans lequel l'additif végétal le cas échéant broyé présente une humidité résiduelle de 5 à 25 %, de préférence de 10 à 20 %, de manière particulièrement préférée d'environ 15 %.

9. Composition prête à l'emploi pour la production de matériaux de construction comprenant un additif végétal, contenant :
(a) 1000 l d'additif végétal dont le poids volumique s'élève de 70 à 160 kg/m³ ;
(b) de 40 à 80 kg d'un minéralisateur à base de chaux blanche hydratée ;
(c) de 200 à 280 kg d'un liant à base de ciment.

10. Matériau de construction comprenant un additif végétal, que l'on obtient via un procédé selon l'une quelconque des revendications 1 à 8 ou par délayage d'une composition prête à l'emploi selon la revendication 9 avec (d) 250 à 400 l d'eau de gâchage.

11. Utilisation d'un procédé selon l'une quelconque des revendications 1 à 8 ou d'une composition prête à l'emploi selon la revendication 9 pour la production de matériaux de construction tels que du béton léger, du mortier léger, une chape de béton léger, ainsi qu'un crépi léger et un crépi procurant une isolation thermique, des murs extérieurs pour des immeubles d'habitation, des panneaux pour la construction rapide et des couches d'absorption pour des parois antibruit.
